# EUROPEAN PATENT SPECIFICATION

(11) **EP 3 130 796 B1**
(45) Date of publication and mention of the grant of the patent: **12.06.2019**
(21) Application number: 14888332.5
(22) Date of filing: 01.04.2014
(51) Int. Cl.: F03D 1/00, E04H 12/34, E04H 12/20, F03D 13/20, E02B 17/02, E02B 17/08, F03D 13/10, F03D 13/25, E04H 12/10, E02B 17/00

(54) **WIND TURBINE ASSEMBLY SYSTEM AND RELATED METHOD**
WINDTURBINENANORDNUNGSSYSTEM UND ZUGEHÖRIGES VERFAHREN
SYSTÈME POUR ASSEMBLER UN AÉROGÉNÉRATEUR ET PROCÉDÉ SUIVI

(43) Date of publication of application: 15.02.2017
(73) Proprietor: Nabrawind Technologies SL, 31002 Pamplona (ES)
(72) Inventor: SANZ PASCUAL, Eneko, E-31002 Pamplona (Navarra) (ES); SAVIL COSTA, Hely Ricardo, E-31133 Uterga (Navarra) (ES)
(74) Representative: Igartua, Ismael
(86) International application number: PCT/ES2014/000056
(87) International publication number: WO 2015/150594

(56) References cited:
- WO-A1-2011/127935
- WO-A1-2011/135172
- WO-A2-2011/055021
- DE-A1- 4 301 467
- DE-A1- 10 111 280
- JP-A- 2005 042 313
- US-B1- 8 578 679
- US-B1- 8 578 679

## Description

### TECHNICAL FIELD

This invention is related to the assembly of wind turbines and, particularly, to the assembly of a nacelle and its corresponding tower, both elements comprising a series of modules that are assembled together. The assembly process follows a series of steps in a certain order and uses some specific tools for each step, and the lifting system is prominent in that it comprises various modules arranged perimetrally.

Furthermore, the system can also be used to mount offshore towers, previously pre-mounting the submerged section and then erecting the wind turbine on top of it.

### PRIOR ART

The assembly and transport of modern wind turbines condition the design because of their increase in size. While wind turbines continue growing in size and power generation capacity, their assembly has nevertheless become more complicated because of the need for even taller cranes, which are scarce on the market and costly to rent.

The current state of the art has numerous patents for avoiding the use of cranes during wind turbine assembly. Most of these patents describe assembly as mounting sections on top of the others, though the following examples entail mounting the modules from below.

Patent US 2009087311 presents a complex system for lifting a tower and subsequently its nacelle with a full rotor. Wind turbines erected in this manner usually stand at a height of between 40 and 90 meters, and are thus dwarfed by the 160-meter tower proposed herein. Additionally, the tower sections are covered by guide rails for engaging the structure actuators that lift the assembly. The lifting system is operated from the same nacelle, which is in turn secured by braces to support the moments that it undergoes.

Patent ES 2389345 presents some clamps with radial movement to restrain the tower while incorporating the next sections. It also includes some vertical cylinders with perpendicular actuators for lifting the wind turbine while it is being mounted. This patent falls short however in that the cylinders do not operate when the clamps engage and vice versa. While logically the wind turbine is not running while it is being erected, there are nevertheless loads derived from its own weight and the incidence of the airflow on the wind turbine. Such stresses create a bending moment, and the reactions should be, after all, vertical loads. Such vertical reactions should be sustained by the conceived system throughout the entire process. In the cited patent, when only the clamps engage, the sole vertical load would be the traction of the clamps against the tower. In order for this traction to suffice to balance the mentioned moment, the radial force would have to be so strong that it would dent the tower. This invention is thus considered to be an insufficient solution to the problem that the present proposal nevertheless solves fully and efficiently.

The state of the art differs from the present invention mainly in that the design is specifically created to withstand the loads sustained by the lifting system during the assembly process, thus providing continuity in the load trajectory and the minimum load possible in the lower zone. To do so, there is no need for redundant systems of clamps or cylinders (as contemplated in the solution for patent ES 2389345), or reinforcement braces and rails for guiding the sections (as contemplated in the solution for patent US 2009087311).

DE4301467 A1 discloses a method for extending an overhead line tower, in particular a lattice tower. A lifting system raises the tower so as to fit there below a new tower module which is connected to the existing tower.

US8578679 B1 discloses a system to assemble a smokestack comprising a preassembled upper ring sections, transition ring sections and lower ring sections and a base ring section and which is arranged on a foundation. The system comprises four lifting systems arranged peripherally at the tower foundation, each lifting system externally containing a lifting platform that rises and descends from a lower or upper point and which is connected to another lifting platform through a joint structure.

WO2011135172 A1 discloses a system to assemble a wind turbine comprising a nacelle, a rotor with its corresponding blades and a tower that supports these elements. The system has a lifting system arranged peripherally at the tower foundation that rises and descends from a lower or upper point to rise the tower so as to fit there below a new tower module. The nacelle can be installed, for example with a crane, on top of the upper module in any lifting phase.

### DISCLOSURE OF THE INVENTION

The object of the invention is to provide a system according to claim 1 and a method according to claim 8.

The most important device used in the present invention is the lifting system, which has the same dimensions as the current modules in which wind turbines are fragmented because of their transport limits. The current modules into which a tower is fragmented or any other wind turbine component have a maximum height of 12 m, which converts to a length of 12 m during shipment. This length is the limit of most standard carriers worldwide. Additionally, the assembly method and the devices employed therein are valid for towers of any sort, though the practical embodiment is done on a latticed tower having a constant cross-section along the full span of its length instead of truncated-cone sections as currently used in solid towers.

In addition to the device, the invention also relates to a method for lifting a complete nacelle with the joint ring between the tower and nacelle. This ring includes the yaw system, wind turbine drive train support bench and the electrical systems necessary to run correctly. All these elements are modular and can be mounted gradually on the tower foundation or a basic tower module for providing the assembly with sufficient height so that handling joint elements can be done easily. The nacelle will be mounted before or after the lifting systems. After mounting the nacelle (without rotor or blades), it will then be lifted and the tower modules will be mounted underneath it.

In a preferred embodiment, three lifting systems are used arranged in a triangular shape peripherally to the tower foundation, and whose lifting platforms associated with these systems can be lifted and lowered at least the 12 meters of each tower module. These lifting systems are equipped with a base having enough surface to provide a stable seating on the terrain surrounding the tower foundation. Depending on the characteristics of the terrain, some sort of anchor can be added without varying the overall concept of the lifting system and assembly process. The connection of the lifting system and basic module or lower tower section, anchored to the foundation, is also contemplated.

Should the latticed tower have additional legs (four, five, etc.), there will be as many lifting systems as legs on the tower so that loads are transmitted as naturally as possible according to the tower design.

The invention also relates to the use and design of a specific tool employed together with the lifting platform, to which, for instance, an auxiliary column and its corresponding connection parts are added for securing the various tower modules that will be erected gradually.

These and further embodiments afford an invention capable of mounting a complete wind turbine (with the exception of its rotor and blades) with no need for an additional boom crane larger than the 160 m of the tower plus the meters corresponding to the nacelle.

### DESCRIPTION OF THE DRAWINGS

Below is a very brief description of a series of drawings useful for better understanding the invention. These drawings serve as a mere example and are expressly related yet not restricted to one embodiment of this invention.
Figure 1 is a view of a complete wind turbine.
Figure 2 depicts plant and front views of the foundation.
Figure 3 depicts plant and front views of the foundation and lower tower module.
Figure 4 depicts plant and front views of the foundation, lower tower module and lifting system.
Figure 5 illustrates a front view of the nacelle mounted on the lifting system.
Figures 6, 7, 8, 9, 10, 11, 12, 13, 14 and 15 depict the various stages in the nacelle and tower assembly and lifting process.
Figure 16 is a view of the last tower section being lifted.
Figure 17 depicts the detail of the tower module connections.
Figure 18 depicts front and plant views of the details of the connection part joint between the auxiliary column and a tower module.
Figures 19, 20 and 21 depict a second practical embodiment over a solid truncated-cone tower and the details of the joint between modules and the connection part.
Figure 22 is the front view of pre-assembly of the underwater tower on a floating platform.
Figures 23, 24, 25, 26, 27 and 28 illustrate the stages of the pre-mounted underwater tower submerging process before mounting the tower and nacelle, which is not part of the invention.
Figure 29 depicts front and plant views of the additional connection part, which is not part of the invention.
Figure 30 illustrates the direct connection part used with the lifting platform, which is not part of the invention.

### DETAILED DISCLOSURE OF THE INVENTION

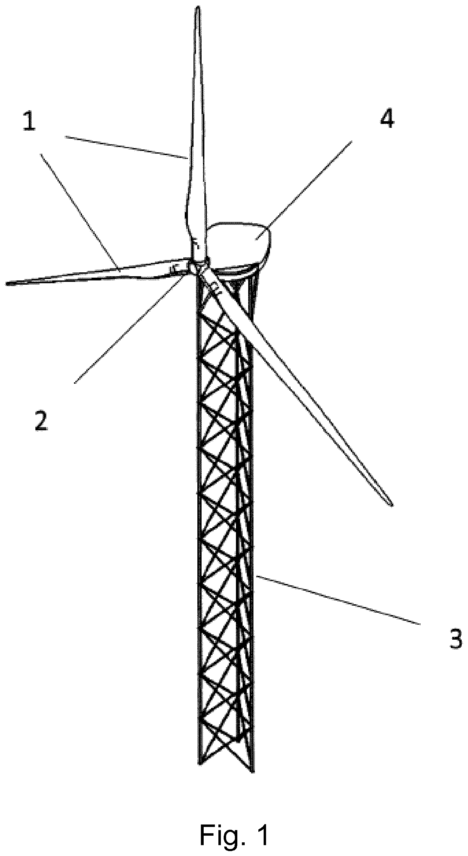

The wind turbine of the invention depicted in figure 1 comprises its corresponding blades (1) connected to the rotor (2) and the nacelle (4) mounted on the tower (3). The tower (3), in a first practical embodiment is a latticed tower of three legs equally-spaced along its full height. As a multi-megawatt generator, this wind turbine is substantially large and its installation would thus require the use of large cranes.

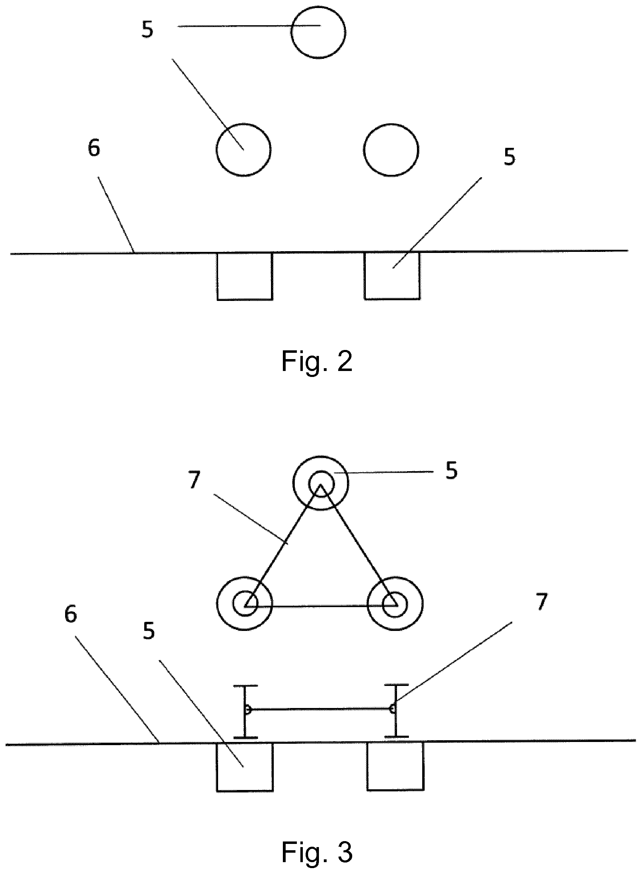

This assembly can be done with no need for cranes through a series of steps and using a series of devices. The first step entails preparing the tower foundation (5), illustrated in figure 2. This foundation (5) is established underground (6) and its dimensions should be in proportion to the loads and stresses to withstand. The next step entails installing the basic tower module (7) illustrated in figure 3. This is an auxiliary element used to provide height and maneuverability between the ground (6) and the elements that will subsequently be mounted: nacelle (4) and various tower sections (3). The design of the basic module (7) is the same as the tower modules though smaller in height. On completion of the assembly process, it can remain mounted with the remaining modules or be dismounted and/replaced with accessories such as an anchor system for offshore models.

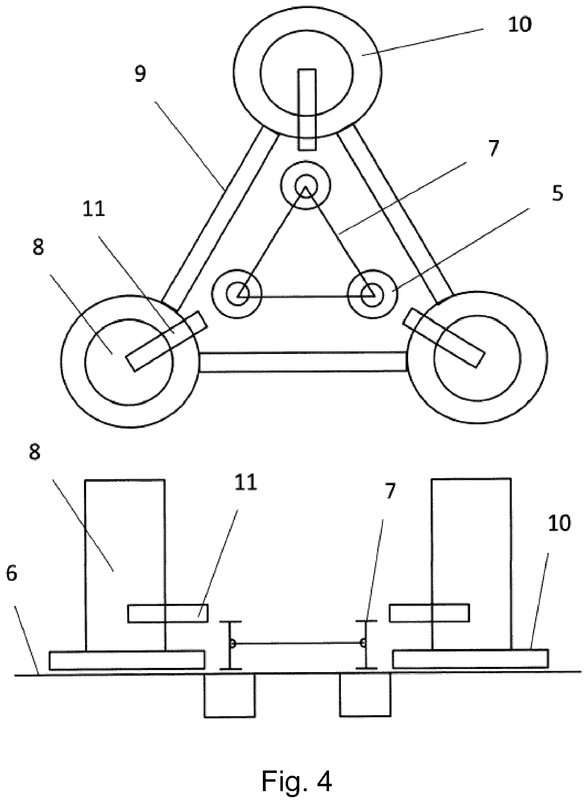

Figure 4 depicts the lifting systems (8) that are arranged in a triangle shape at the edges of the foundation (5) and have a joint structure (9) that extends between the three lifting systems (8).

Each support system is supported by its corresponding base (10) and has a lifting platform (11) capable of moving between the point below and point above the cited lifting system (8). The bottom of this lifting system (8) has a lifting mechanism that could comprise electric motors, hydraulic cylinders, rack-pinion units, chains, etc. These elements lift and lower the lifting platform (11) and the loads are absorbed by these platforms and transferred to the lifting systems (8) and their corresponding bases (10), since these bases have enough diameter to withstand the moments arising from eccentric loads produced between the wind turbine and the lifting system (8). It should be borne in mind that the distance between the axis of the tower and each axis of the lifting system creates a secondary moment against the structure that should be considered.

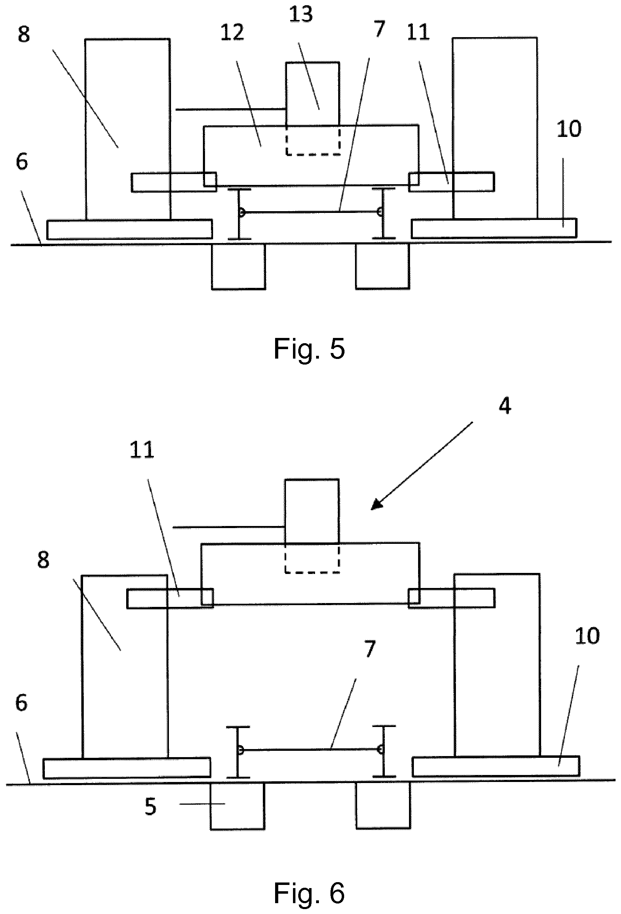

The assembly commences at figure 5 with the constitution of the nacelle (4) and its constituent elements. First the joint ring (12) will be mounted between the tower and drive train, a ringshaped part that bears the yaw system at the top and has a capacity to support the drive train and house part of the generator (13) inside. The drive train, bench, connection part and electrical systems form the element defined as the nacelle (4), mounted over the lower module (7) and supported on the corresponding lifting platforms (11).

The lifting of the nacelle is illustrated in figure 6 and occurs when each lifting platform (11) moves from a lower to an upper point on the corresponding lifting system (8).

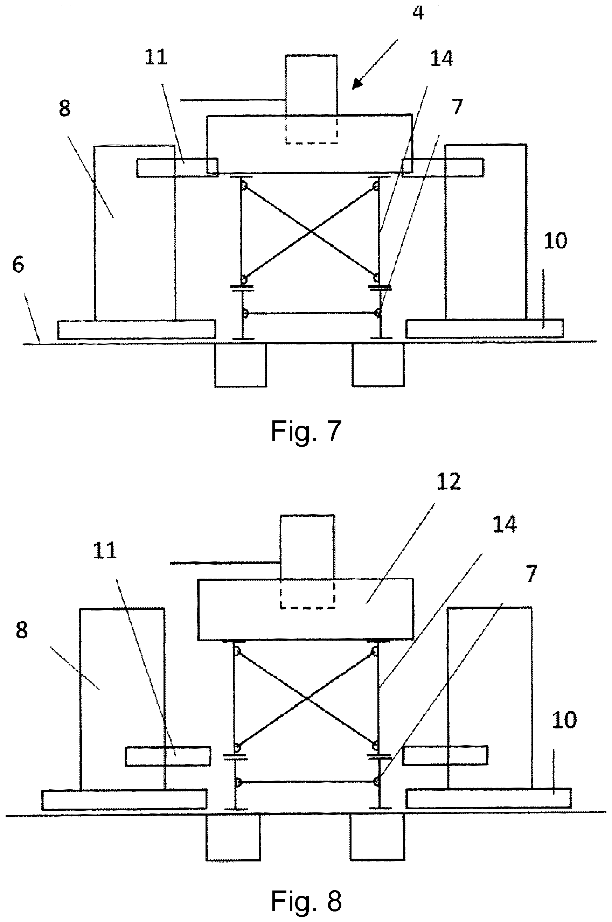

Figures 7 and 8 illustrate how the upper tower module (14) is mounted under the nacelle (4) and above the lower module (7), followed by the anchoring of this module by bolting the legs of this module (14) with the plates (not shown in the figure) on the joint ring (12) and the lower module (7). When the foregoing is secured with the corresponding fastening elements, the lifting platforms are then lowered (11).

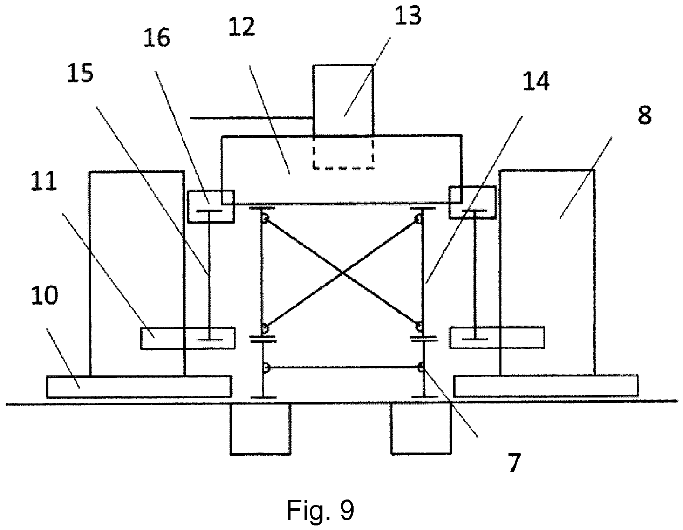

Figure 9 depicts a new auxiliary element that can become part of the assembly, an auxiliary column (15) is anchored between the lifting platforms (11) and some connection flanges (16) attached to the joint ring (12).

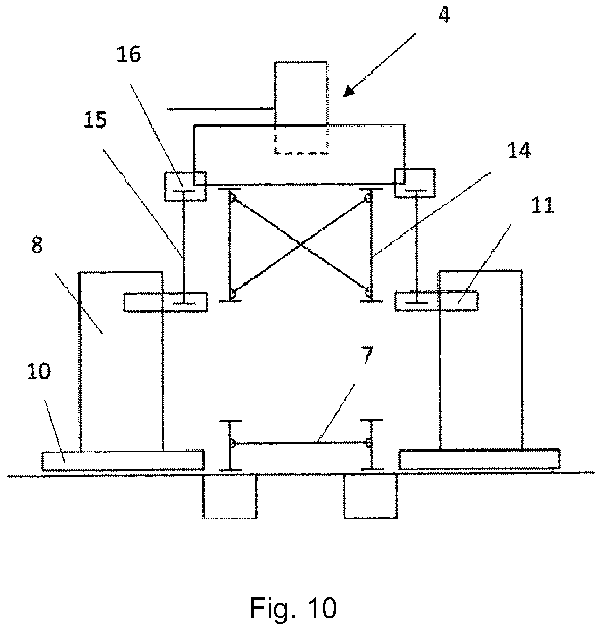

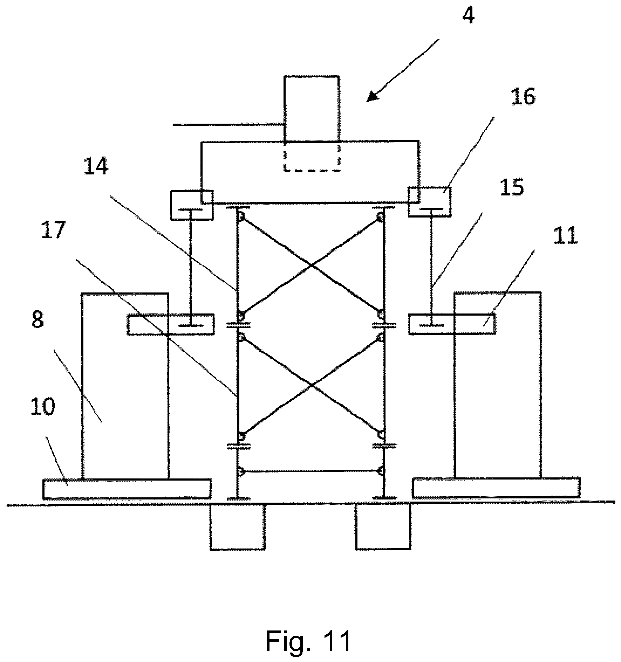

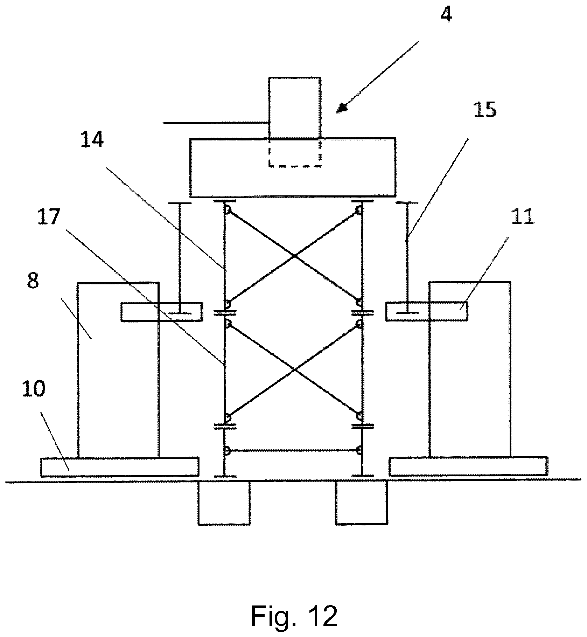

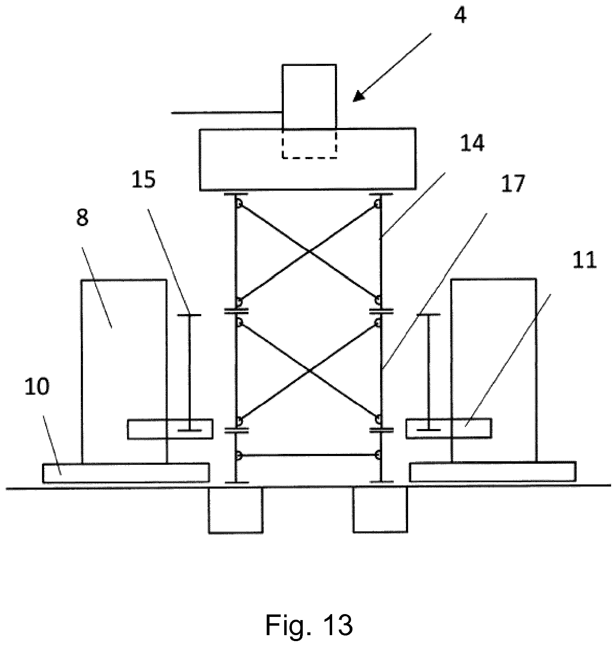

Figures 10, 11, 12 and 13 depict a four-step continuation of the assembly process: first lifting the assembly and, secondly, introducing a new tower module (17) and anchoring the modules in contact (14, 17 and 7). The connection flanges (16) are then released followed by the lowering of the lifting platforms (11) and associated auxiliary columns (15).

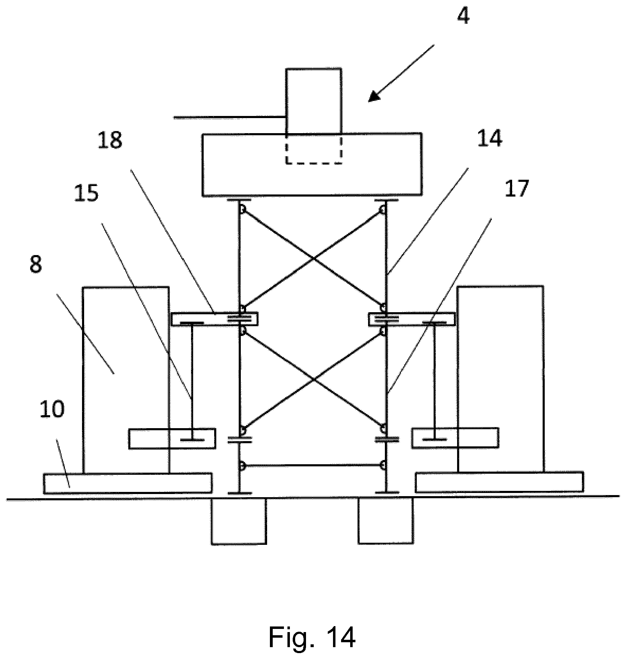

Figure 14 depicts the use of a new connection part (18) as an auxiliary element to continue the assembly. This connection part (18) is anchored at the top of the auxiliary column (15), though not to the joint ring (12) as in the previous step, but rather to the joint between modules (14 and 17).

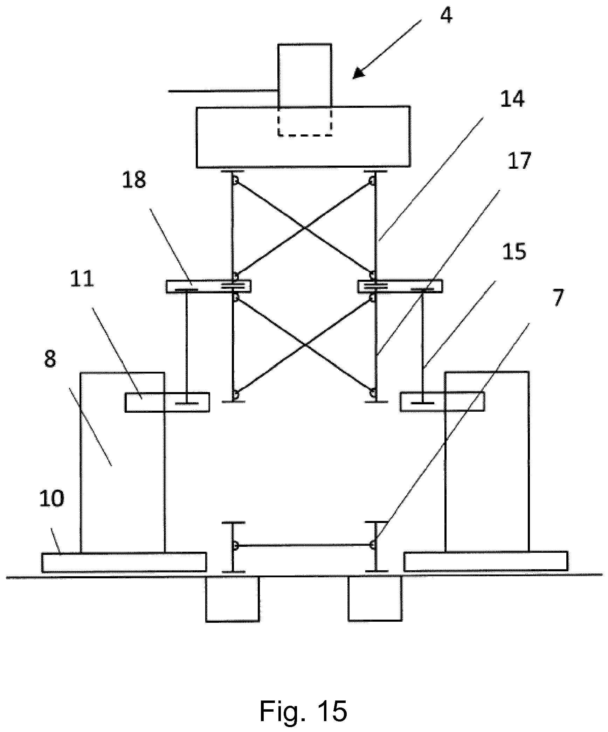

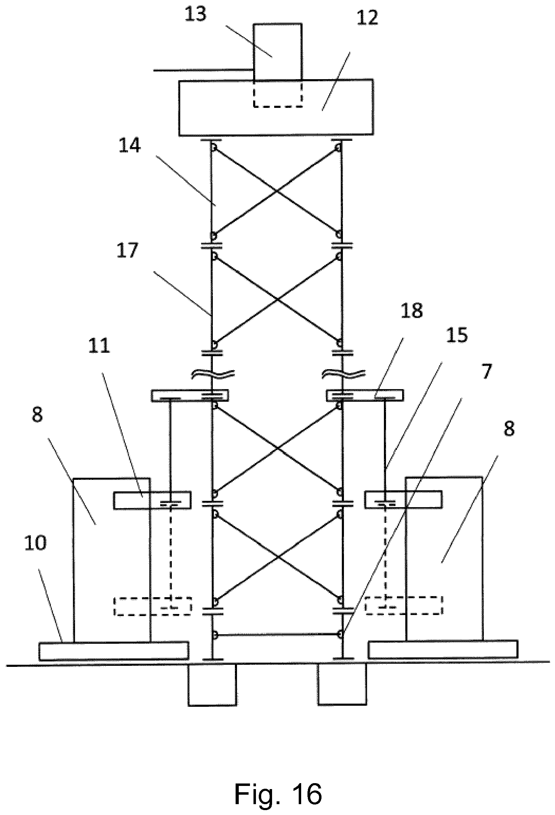

Figure 15 illustrates the continuation of the process for lifting the nacelle (4) and the two assembled tower modules (14 and 17), followed by the mounting of a further module (not shown in the figure) at the bottom. Likewise, the new module is anchored to the previous module and the lower module. The connection parts are then released and the lifting platforms lowered. This step will then be repeated until all the tower modules have been installed as shown in figure 16.

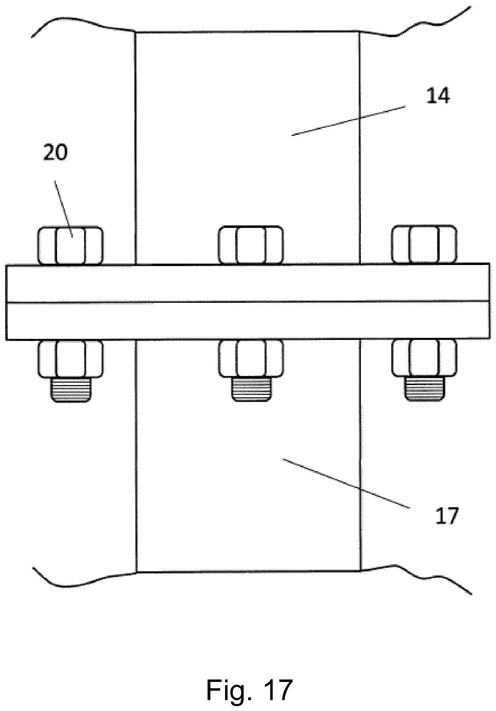

The fastening elements shown in figure 17 represent the joint between modules, e.g., the joint between the upper tower module (14) and the lower module (7) shown in figures 8 and 9, or the joint between modules (14 and 17) shown in figure 14.

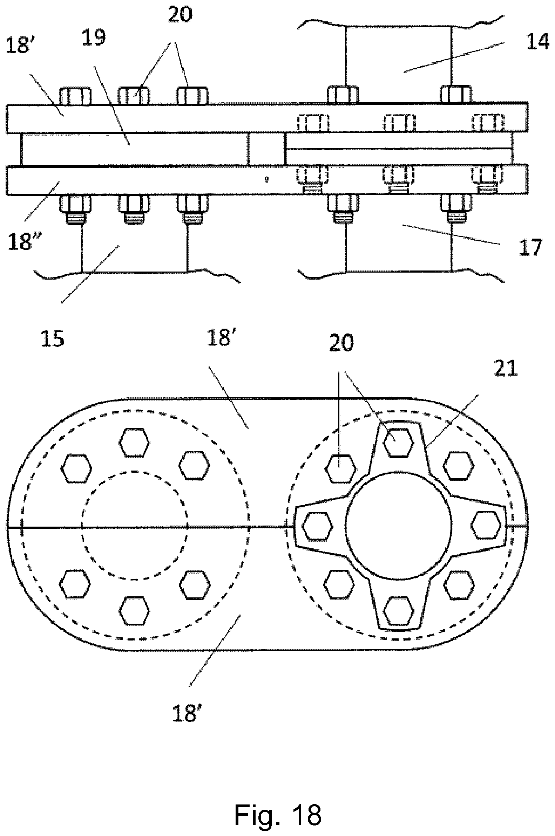

Figure 18 depict one practical embodiment of the connection part (18) between the auxiliary column (15) and the tower columns for the modules to lift (14 and 17). The front view illustrates that the end of the auxiliary column (15) is a circular flange (19) halfway between the two parts constituting the connection part (18): the upper part (18') and the lower part (18"). The ends of the connection part (18) are circular and have through holes for fitting the corresponding fastening elements (20). The dotted line in this same front view shows the bolts (20) joining the two tower modules (e.g., 14 and 17). Again, the upper part (18') and lower part (18") of the connection part (18) are arranged in a "sandwich" over the tower module joint. Likewise, the circular end of the connection part (18) corresponding to the joint between modules has a cross-shaped easing (21) to keep the bolts (20) on this joint accessible. This end also has through holes on the edge of the easing (21) for inserting the corresponding fastening elements.

Each connection part (18' and 18") is subdivided into two parts to mount them from the side around the columns of the modules. This subdivision generates two symmetrical parts: one for the left and the other for the right.

The connection flange (16) has the same configuration as the connection part (18), differing in the positioning of the easing (21) and the manner of anchoring to the joint ring (12).

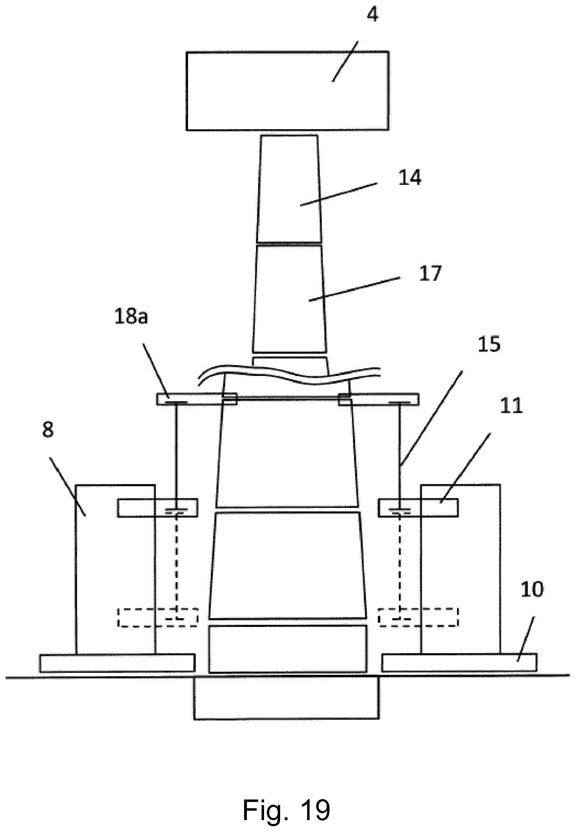

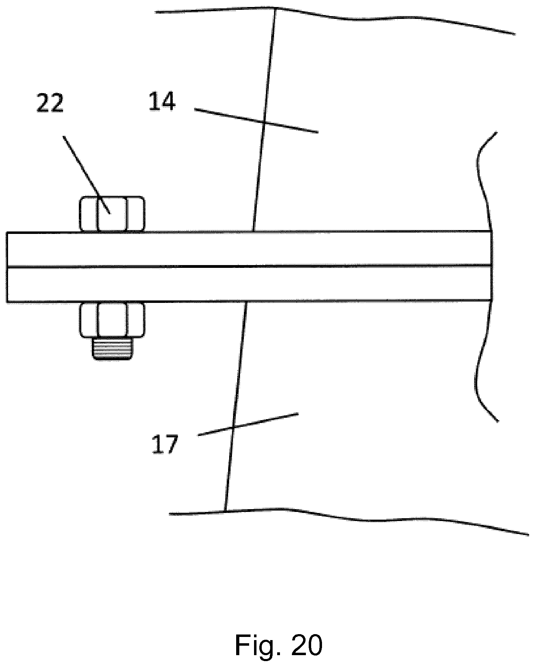

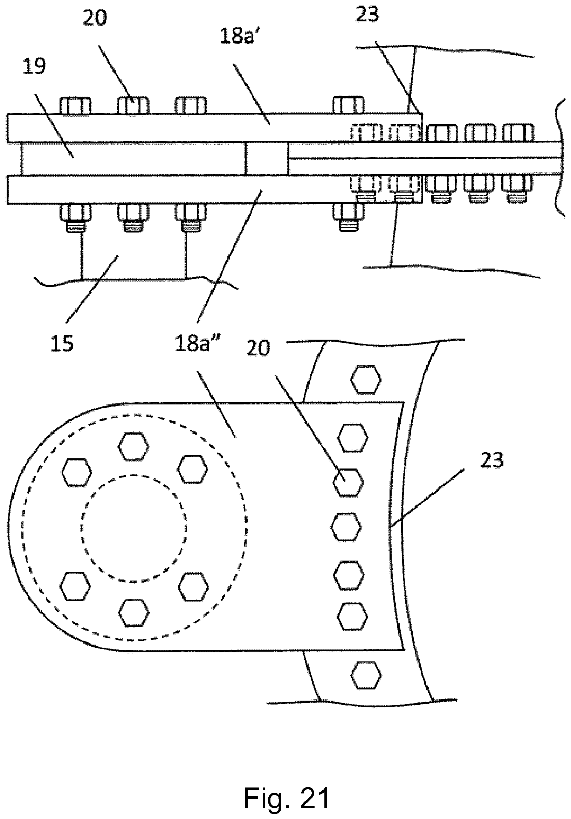

Figure 19 depicts a second practical embodiment where the tower comprises solid truncated-cone rings, which could be made of metal, concrete or any other material. The solution to be able to work over the truncated-cone modules entails having connection parts (18a) of different lengths or an extendable platform (11). Figure 20 depicts a joint between truncated-cone modules (22). Figure 21 illustrates a solution with the new connection part (18a), also comprising an upper part (18a') and a lower part (18a"), that will be assembled directly to the joint of the truncated-cone modules (22). In this case, the connection part will be the same for the circular end fastened to the auxiliary column (15), while the other end has a curved shape (23) to adapt to the joint between truncated-cone modules (22).

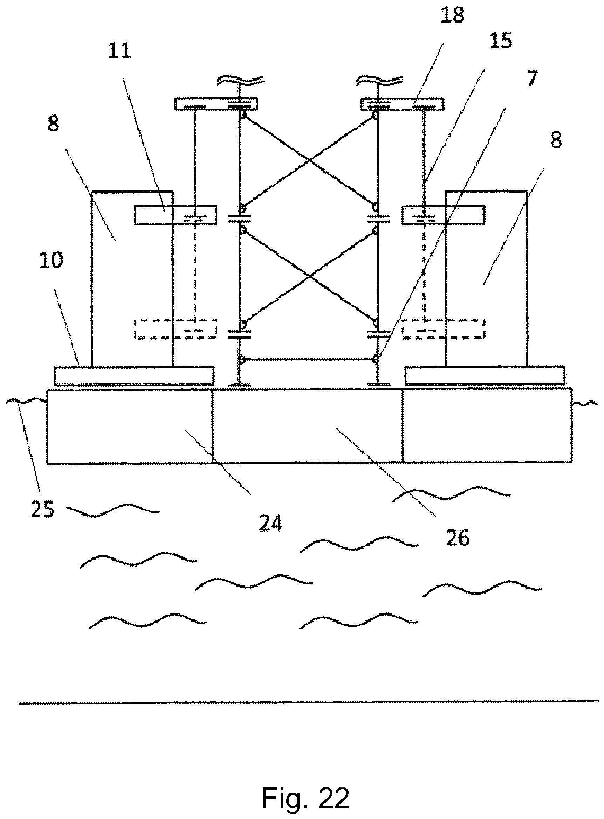

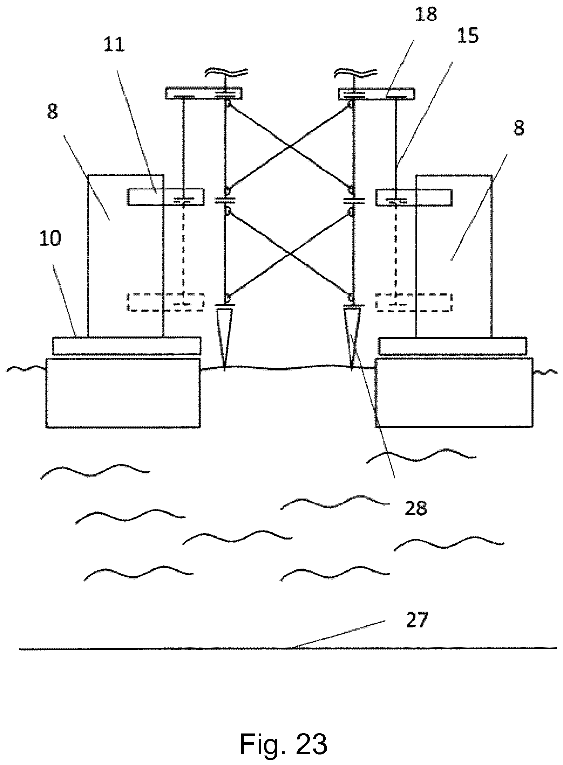

Figure 22 depicts another practical embodiment for a floating platform (24) prepared for erecting an offshore wind turbine using the same tool, and first mounting the underwater section before the rest of the wind turbine. The floating platform (24) rests at sea level (25) and supports the corresponding lifting systems (8). A retractable platform (26) is established between these platforms (24) for installing the basic module (7). In this case, the first step is not mounting the nacelle but rather installing the underwater module, which is submerged under sea level. The basic module (7) is thus mounted before installing the upper underwater tower module (14), lowering the lifting platforms (11), installing the auxiliary column (15) and connection part (18), lifting the upper underwater tower module (14), and mounting the module (17) and successive modules until completing the distance between the floating platform (24) and the seabed (27). Completion of this stage is followed by a step, which is not part of the invention, of disconnecting the basic module (7), opening the retractable platform (26) and mounting the anchor system to the seabed (28) as shown in figure 23.

A new tool is now used, namely the additional support (29), which is not part of the invention, for anchoring the entire underwater section and, with the assistance of the same lifting system (8), submerging the underwater section to the seabed (27).

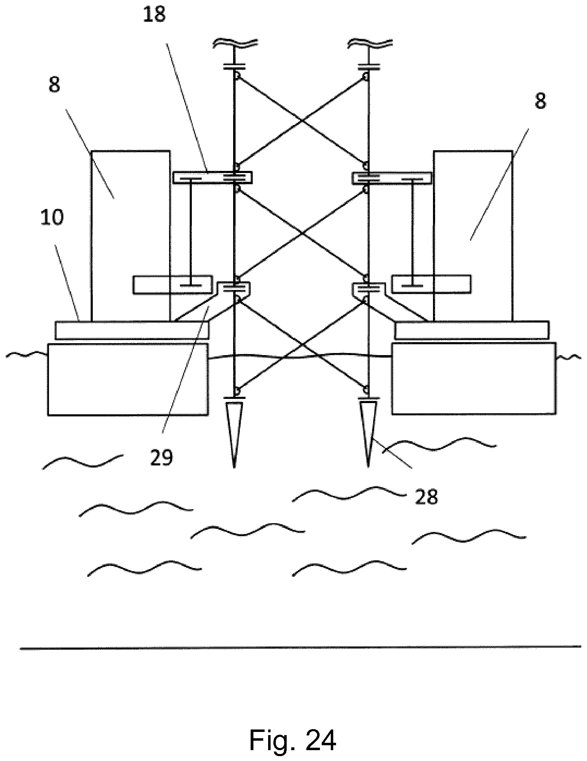

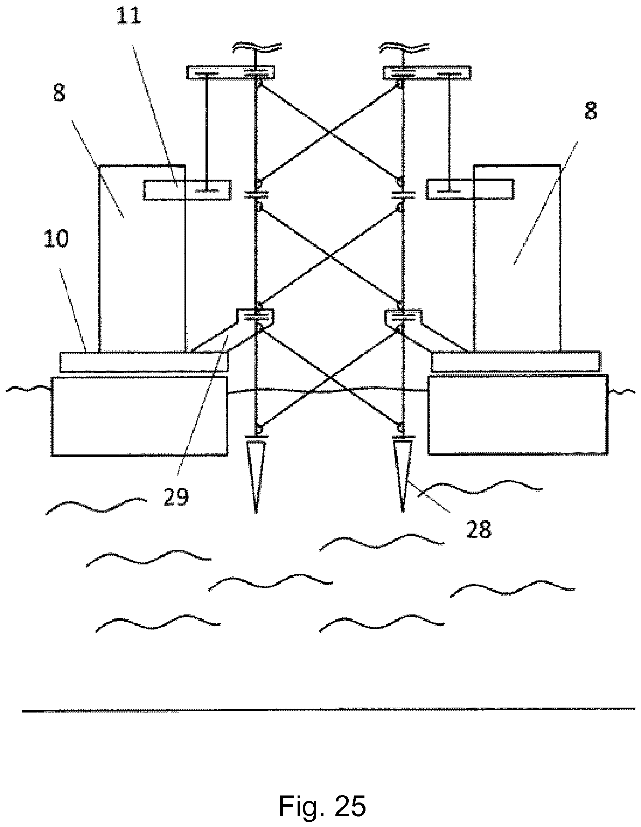

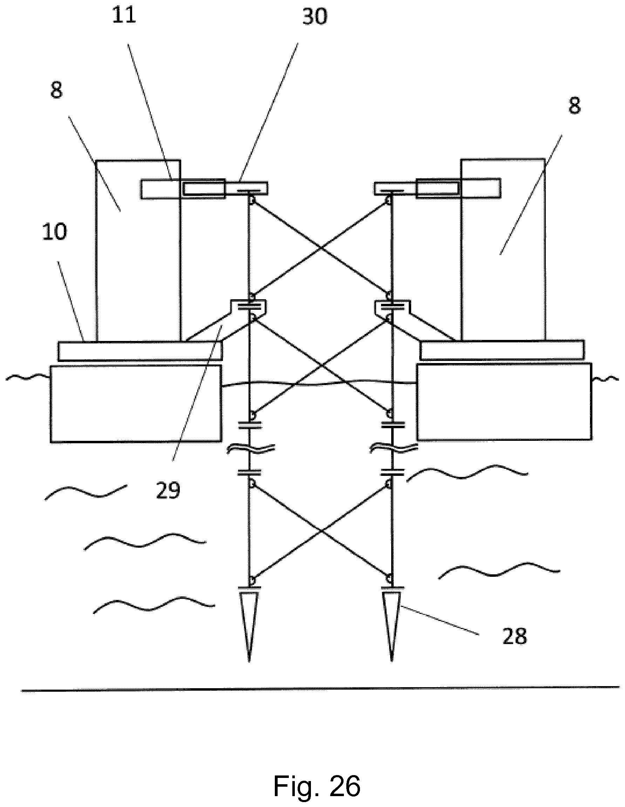

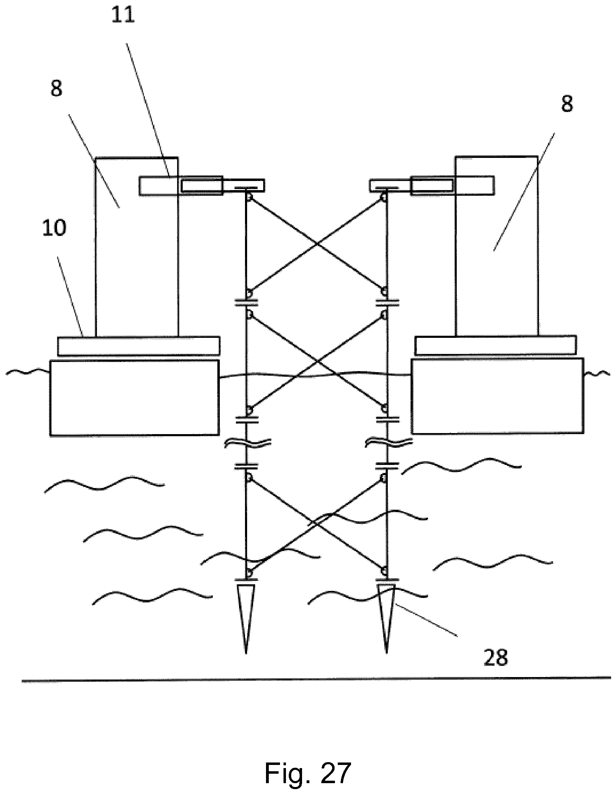

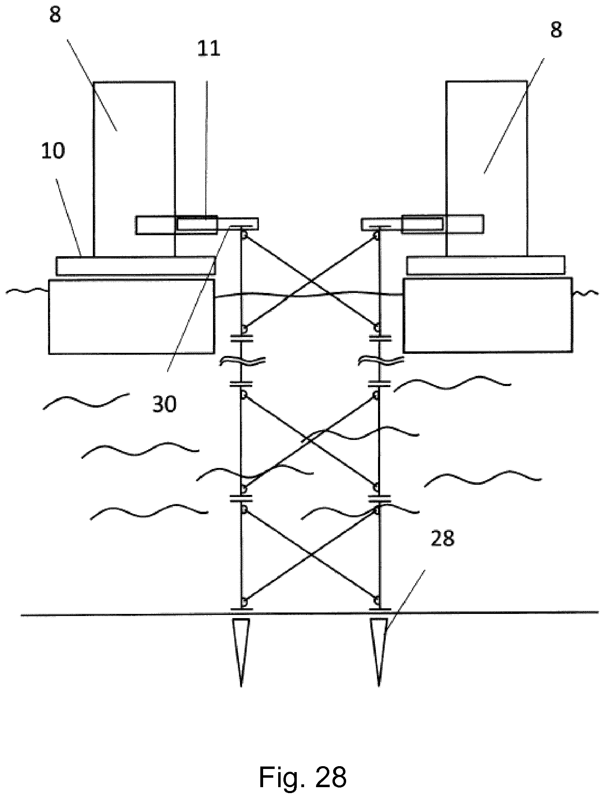

Figures 24 and 25 illustrate how, assisted by the additional support part (29), the lifting platforms (11) will lower the modules in a method that is not part of the invention. In the final step, when the part has yet to be submerged and is still at the level of the lifting system (8), instead of using the auxiliary column (15) and connection element (18), a new direct connection part (30), not part of the invention, is used as shown in figures 26, 27 and 28.

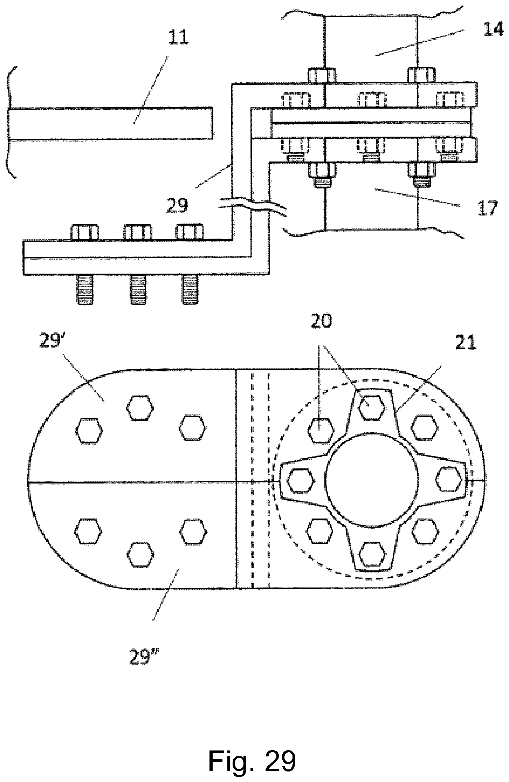

Figure 29 depicts the additional support part (29) arranged in a staggered and slanting manner so as not to interfere with the lifting platform (11) from the base (10) of the lifting system (8) to the joint between modules. This additional support part (29) also comprises two parts (29' and 29"), subdivided into two parts to mount them from the side around the columns of the modules. The circular end of the additional support part (29) has a cross-shaped easing (21) to keep the bolts (20) on the joint accessible.

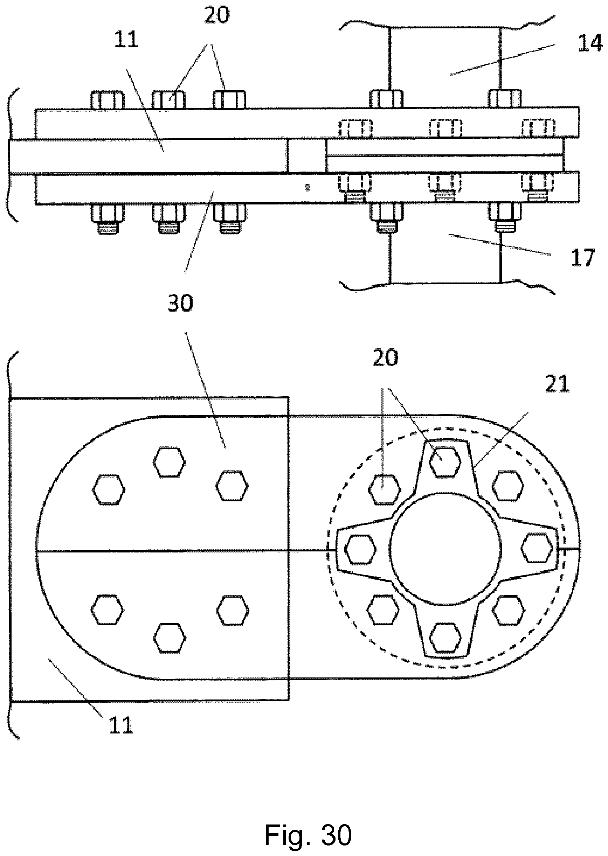

Figure 30 depicts the direct connection part (30) comprising two equal parts in a sandwich arrangement over the lifting platform (11) and joints between tower modules (3). This part also comprises two parts (30' and 30"). In this case, the circular end of the direct connection part (30) also has a cross-shaped easing (21) to keep the bolts (20) on the joint accessible. After securing the underwater tower section, the original process is then followed to erect the entire wind turbine on that underwater section as if it were a foundation on the ground.

The method for lifting the nacelle (4) and tower (3) of a wind turbine on the ground or offshore with a previously mounted underwater section is detailed below:
Prepare the foundation (5) or retractable platform (26)
Install the basic tower module (7)
Mounting the lifting systems (8)
Fastening the nacelle (4) [drive train, generator (13), bench and joint ring (12)]
Lifting the nacelle (4)
Mounting the upper tower module (14)
Lowering the lifting platforms (11)
Installing the auxiliary column (15) and connection flange (16)
Lifting the nacelle (4) with the upper tower module (14)
Installation of the module (17)
Disconnecting the auxiliary column (15)
Lowering the lifting platforms (11)
Installing the auxiliary column (15) and connection part (18)
Lifting the nacelle (4) with the modules (14 and 17)
Repeating with the remaining modules until completion of the assembly.

## Claims

1. System comprising a wind turbine comprising a nacelle (4), rotor (2) with its corresponding blades (1) and a tower (3) that supports said elements, **characterized in that** the system has at least three lifting systems (8) arranged peripherally at the tower foundation (3) or on a retractable offshore platform (26), each lifting system (8) externally containing a lifting platform (11) that rises and descends from a lower or upper point, and a base (10) connected through a joint structure (9) to the remaining bases, and **in that** the system comprises an auxiliary column (15) and different connection parts, being a connection flange (16), a connection part (18), a truncated-cone connection part (18a) and a direct offshore connection part (30), the lifting platform (11) works by anchoring itself directly to the nacelle (4) or through the auxiliary column (15) that cooperates with the different connection parts, lifting or lowering the successive tower modules (3), and supporting them from this connection.

2. System according to claim 1, wherein before mounting the first tower section, there is basic module (7), which is the same insofar as design to the tower modules and placed over the foundation (5) or retractable platform (26), to provide height for handling fastenings and installing the anchor system (28).

3. System according to the previous claims, wherein the connection parts (16, 18, 18a and 30) comprise two equal parts that are split symmetrically in half and fastened as a "sandwich" over the auxiliary column (15) around the joints between tower modules (3), under the joint ring (12) and over the lifting platform (11), securing all these parts with fastening elements.

4. System according to claim 3, wherein the ends of the connection part (18) are circular and have through-holes for inserting the corresponding bolts (20) in the part corresponding to the auxiliary column (15) under a circular flange (19) and, on the opposite end, cooperate with a cross-shaped easing (21) that provides a solution for access to fastening bolts between modules.

5. System according to claim 3, wherein the connection part (18a) is circular on the end that attaches to the auxiliary column (15) while the other end is curved (23) to be able to adapt to the joint between the truncated-cone modules (22) and may be extendable or a single part with different lengths.

6. System according to claim 3, wherein the direct connection part (30) is circular with through-holes for inserting the corresponding bolts (20) in the part corresponding to the auxiliary column (15) or lifting platform (11) and, on the opposite end, has a cross-shaped easing (21).

7. System according to the claim 1, wherein the lifting systems (8) form a triangle for a three-legged tower (3), a square for a four-legged tower (3) and so on, and have a joint structure (9) between the bases (10) of the lifting systems (8).

8. Method for assembling a wind turbine comprising a nacelle (4), rotor (2) with its corresponding blades (1) and a tower (3) that supports these elements, **characterized in that** the method comprises steps of:
- preparing a foundation (5) or offshore platform (24),
- installing a basic module (7) on the foundation (5) or retractable platform (26),
- mounting lifting systems (8) peripherally,
- fastening and lifting the nacelle (4),
- mounting an upper tower module (14) on the gap under the nacelle (4)
- lowering lifting platforms (11),
- installing an auxiliary column (15) and a connection flange (16),
- lifting the nacelle (4) with an upper tower module (14),
- mounting a module (17) on the gap under the nacelle (4) and the upper module (14),
- disconnecting the auxiliary column (15) and lowering the lifting platforms (11),
- installing the auxiliary column (15) and a connection part (18),
- lifting the nacelle (4) with the modules (14, 17), and
- repeating with the remaining modules until completion of the assembly.

9. Method for assembling a wind turbine according to claim 8, wherein the different parts constituting the nacelle (4): joint ring (12), generator (13), drive train, bench and electric systems are assembled on the basic module (7) before or after mounting the lifting systems.

10. Method for assembling a wind turbine according to claim 8 or 9, wherein the lifting system (8) is anchored to the ground (6) and the lower tower section (3) or the basic module (7).

11. Method for assembling a wind turbine according to any of claims 8 to 10, wherein the basic module (7) can remain as part of the tower or dismounted after completing the assembly.

## Patentansprüche

1. System, umfassend eine Windturbine mit einer Gondel (4), einem Rotor (2) mit den zugehörigen Rotorblättern (1) und einem Turm (3), der die Elemente trägt, **dadurch gekennzeichnet, dass** das System mindestens drei Hebesysteme (8) aufweist, die peripher am Turmfundament (3) oder auf einer ausfahrbaren Offshore-Plattform (26) angeordnet sind, wobei jedes Hebesystem (8) außen eine Hebebühne (11) enthält, die von einem unteren oder oberen Punkt aufwärts oder abwärts fährt, und einen Sockel (10), der durch eine Verbindungsstruktur (9) mit den übrigen Sockeln verbunden ist, **und dass** das System eine Hilfssäule (15) und verschiedene Verbindungsteile, bestehend aus einem Verbindungsflansch (16), einem Verbindungsteil (18), einem Kegelstumpfverbindungsteil (18a) und einem Offshore-Direktverbindungsteil (30), umfasst, wobei der Betrieb der Hebebühne (11) durch direkte Verankerung an der Gondel (4) oder mithilfe der Hilfssäule (15) erfolgt, die mit den verschiedenen Verbindungsteilen zusammenwirkt, die aufeinanderfolgenden Turmmodule (3) anhebt oder absenkt und sie von dieser Verbindung aus stützt.

2. System nach Anspruch 1, wobei vor der Montage des ersten Turmabschnitts ein Basismodul (7) vorhanden ist, das in Bezug auf die Konstruktion der Turmmodule gleich ist und zwecks geeigneter Höhe für die Handhabung von Befestigungen und die Installation des Ankersystems (28) auf dem Fundament (5) oder der ausfahrbaren Plattform (26) angeordnet ist.

3. System nach den vorstehenden Ansprüchen, wobei die Verbindungsteile (16, 18, 18a und 30) zwei gleiche Teile umfassen, die symmetrisch in zwei Hälften geteilt und als "Sandwich" über der Hilfssäule (15) um die Verbindungen zwischen Turmmodulen (3) herum, unter dem Verbindungsring (12) und über der Hebebühne (11) befestigt sind und alle diese Teile mit Befestigungselementen sichern.

4. System nach Anspruch 3, wobei die Enden des Verbindungselements (18) kreisförmig sind und Durchgangsbohrungen zum Einsetzen der entsprechenden Schrauben (20) in das der Hilfssäule (15) entsprechende Teil unter einem kreisförmigen Flansch (19) aufweisen und am gegenüberliegenden Ende mit einer kreuzförmigen Abflachung (21) zusammenwirken, die eine Lösung für den Zugang zu Befestigungsschrauben zwischen Modulen bietet.

5. System nach Anspruch 3, wobei das Verbindungsteil (18a) an dem an der Hilfssäule (15) befestigten Ende kreisförmig ist, während das andere Ende gebogen ist (23), um sich an die Verbindung zwischen den Kegelstumpfmodulen (22) anpassen zu können, und entweder verlängerbar oder ein einzelnes Teil mit unterschiedlichen Längen sein kann.

6. System nach Anspruch 3, wobei das Direktverbindungsteil (30) kreisförmig mit Durchgangsbohrungen zum Einsetzen der entsprechenden Schrauben (20) in das der Hilfssäule (15) oder Hebebühne (11) entsprechende Teil ist und am gegenüberliegenden Ende eine kreuzförmige Abflachung (21) aufweist.

7. System nach Anspruch 1, wobei die Hebesysteme (8) für einen dreibeinigen Turm (3) ein Dreieck, für einen vierbeinigen Turm (3) ein Quadrat und so weiter bilden und eine Verbindungsstruktur (9) zwischen den Sockeln (10) der Hebesysteme (8) aufweisen.

8. Verfahren zum Zusammenbau einer Windturbine, umfassend eine Gondel (4), einen Rotor (2) mit den zugehörigen Rotorblättern (1) und einen Turm (3), der diese Elemente trägt, **dadurch gekennzeichnet, dass** das Verfahren die folgenden Schritte umfasst:
- Vorbereiten eines Fundaments (5) oder einer Offshore-Plattform (24),
- Installieren eines Basismoduls (7) auf dem Fundament (5) oder der ausfahrbaren Plattform (26),
- periphere Montage der Hebesysteme (8),
- Befestigen und Anheben der Gondel (4),
- Montieren eines oberen Turmmoduls (14) auf dem Zwischenraum unter der Gondel (4)
- Absenken der Hebebühnen (11),
- Installieren einer Hilfssäule (15) und eines Anschlussflansches (16),
- Anheben der Gondel (4) mit einem oberen Turmmodul (14),
- Montieren eines Moduls (17) auf dem Zwischenraum unter der Gondel (4) und dem oberen Modul (14),
- Abtrennen der Hilfssäule (15) und Absenken der Hebebühnen (11),
- Installieren der Hilfssäule (15) und eines Verbindungsteils (18),
- Anheben der Gondel (4) mit den Modulen (14, 17) und
- Wiederholung mit den übrigen Modulen bis zum Abschluss der Montage.

9. Verfahren zum Zusammenbau einer Windturbine nach Anspruch 8, wobei die verschiedenen Teile der Gondel (4) - Verbindungsring (12), Generator (13), Antriebsstrang, Bank und elektrische Systeme - vor oder nach der Montage der Hebesysteme auf dem Grundmodul (7) montiert werden.

10. Verfahren zum Zusammenbau einer Windturbine nach Anspruch 8 oder 9, wobei das Hebesystem (8) am Boden (6) und am unteren Turmabschnitt (3) oder am Basismodul (7) verankert wird.

11. Verfahren zum Zusammenbau einer Windturbine nach einem der Ansprüche 8 bis 10, wobei das Basismodul (7) nach Abschluss der Montage als Teil des Turms bestehen bleiben oder demontiert werden kann.

## Revendications

1. Système comprenant un aérogénérateur comprenant une nacelle (4), un rotor (2) avec ses pales correspondantes (1) et une tour (3) qui supporte lesdits éléments, **caractérisé en ce que** le système comporte au moins trois systèmes de levage (8) disposés en périphérie sur les fondations de la tour (3) ou sur une plate-forme offshore rétractable (26), chaque système de levage (8) contenant à l'extérieur une plate-forme de levage (11) qui monte et descend depuis un point inférieur ou supérieur, et une base (10) reliée par une structure de jonction (9) aux autres bases, et **en ce que** le système comprend une colonne auxiliaire (15) et différentes parties de raccordement, qui sont une bride de raccordement (16), une partie de raccordement (18), une partie de raccordement tronconique (18a) et une partie de raccordement offshore direct (30), la plate-forme de levage (11) fonctionne en s'ancrant directement à la nacelle (4) ou par la colonne auxiliaire (15) qui coopère avec les différentes parties de raccordement, soulevant ou abaissant les modules de tour successifs (3) et les portant depuis cette connexion.

2. Système selon la revendication 1, dans lequel, avant le montage de la première section de tour, il existe un module de base (7), qui est le même dans la mesure où il est conçu sur les modules de tour et placé sur les fondations (5) ou la plate-forme rétractable (26), pour fournir une hauteur pour la manipulation des fixations et pour installer le système d'ancrage (28).

3. Système selon les revendications précédentes, dans lequel les pièces de raccordement (16, 18, 18a et 30) comprennent deux parties égales qui sont divisées symétriquement par la moitié et fixées en "sandwich" sur la colonne auxiliaire (15) autour des joints entre les modules de tour (3), sous l'anneau de jonction (12) et sur la plate-forme de levage (11), en fixant toutes ces parties avec des éléments de fixation.

4. Système selon la revendication 3, dans lequel les extrémités de la partie de raccordement (18) sont circulaires et présentent des trous traversants pour insérer les boulons correspondants (20) dans la partie correspondant à la colonne auxiliaire (15) sous une bride circulaire (19) et, à l'extrémité opposée, coopérer avec un dispositif de desserrage en croix (21) qui offre une solution pour accéder aux boulons de fixation entre modules.

5. Système selon la revendication 3, dans lequel la partie de raccordement (18a) est circulaire à l'extrémité qui se fixe à la colonne auxiliaire (15) tandis que l'autre extrémité est incurvée (23) pour pouvoir s'adapter au joint entre les modules tronconiques (22) et peut être extensible ou une seule pièce avec différentes longueurs.

6. Système selon la revendication 3, dans lequel la partie de raccordement direct (30) est circulaire avec des trous traversants pour insérer les boulons correspondants (20) dans la partie correspondant à la colonne auxiliaire (15) ou à la plate-forme de levage (11) et présente, à l'extrémité opposée, un dispositif de desserrage en croix (21).

7. Système selon la revendication 1, dans lequel les systèmes de levage (8) forment un triangle pour une tour à trois pieds (3), un carré pour une tour à quatre pieds (3) et ainsi de suite, et présentent une structure de joint (9) entre les bases (10) des systèmes de levage (8).

8. Procédé pour assembler un aérogénérateur comprenant une nacelle (4), un rotor (2) avec ses pales correspondantes (1) et une tour (3) qui supporte ces éléments, **caractérisé en ce que** le procédé comprend les étapes de :
- préparer des fondations (5) ou une plate-forme offshore (24),
- installer un module de base (7) sur les fondations (5) ou la plate-forme rétractable (26),
- monter en périphérie des systèmes de levage (8),
- fixer et lever la nacelle (4),
- monter un module de tour supérieur (14) sur la fente sous la nacelle (4)
- abaisser des plates-formes de levage (11),
- installer une colonne auxiliaire (15) et une bride de raccordement (16),
- soulever la nacelle (4) avec un module de tour supérieur (14),
- monter un module (17) sur la fente sous la nacelle (4) et le module supérieur (14),
- déconnecter la colonne auxiliaire (15) et abaisser les plates-formes de levage (11),
- installer une colonne auxiliaire (15) et une partie de raccordement (18),
- soulever la nacelle (4) avec les modules (14, 17), et
- répéter avec les modules restants jusqu'à la fin de l'assemblage.

9. Procédé pour assembler un aérogénérateur selon la revendication 8, dans lequel les différentes parties constituant la nacelle (4) : anneau de jonction (12), générateur (13), groupe motopropulseur, banc et systèmes électriques, sont assemblées sur le module de base (7) avant ou après le montage des systèmes de levage.

10. Procédé pour assembler un aérogénérateur selon la revendication 8 ou 9, dans lequel le système de levage (8) est ancré au sol (6) et à la section de tour inférieure (3) ou au module de base (7).

11. Procédé pour assembler un aérogénérateur selon l'une quelconque des revendications 8 à 10, dans lequel le module de base (7) peut rester en tant que partie de la tour ou être démonté une fois l'assemblage terminé.
